# EUROPEAN PATENT APPLICATION

(11) **EP 4 492 054 A1**
(43) Date of publication of application: **15.01.2025**
(21) Application number: 24180982.1
(22) Date of filing: 10.06.2024
(51) Int. Cl.: G01N 31/10, B01J 19/24, C25B 9/70, C25B 11/091

(54) **ELECTROCHEMICAL REACTION SYSTEM**

(30) Priority: 14.07.2023 JP 2023115985
(71) Applicant: Hitachi, Ltd., Tokyo 100-8280 (JP)
(72) Inventor: FUKATANI, Naoto, Tokyo, 100-8280 (JP); TAKAMATSU, Daiko, Tokyo, 100-8280 (JP); TAKAHASHI, Hiromasa, Tokyo, 100-8280 (JP); YABUUCHI, Shin, Tokyo, 100-8280 (JP); WATANABE, Koichi, Tokyo, 100-8280 (JP)
(74) Representative: MERH-IP Matias Erny Reichl Hoffmann Patentanwälte PartG mbB

(57) **Abstract**

An electrochemical reaction system includes an electrochemical cell having a first electrode functioning as a cathode, a second electrode functioning as an anode, and a chamber in which electrochemical reaction is made, a power supply apparatus that applies voltage between the first electrode and the second electrode, and a fluid supply apparatus that supplies fluid involved in the electrochemical reaction to the chamber. At least one of the first electrode or the second electrode is made of plural types of electrode materials different from each other in at least one of the composition of a material forming the electrode or the surface structure of the electrode. At least part of a wall surface of the chamber is made of the plural types of electrode materials.

## Description

### BACKGROUND OF THE INVENTION

### 1. Field of the Invention

The present invention relates to a multielectrode electrochemical reaction system that makes electrochemical reaction using an electrode catalyst made of plural types of materials different from each other in a composition or a surface structure.

### 2. Description of Related Art

In recent years, a technique of making electrochemical reaction using an electrode catalyst has attracted attention. An electrochemical cell including the electrode catalyst can efficiently generate power using plentiful resources, and can efficiently perform substance transformation using power. With use of the electrode catalyst, sustainable energy circulation and substance circulation for a society have been expected to be achieved.

In a case of performing the substance transformation using the electrode catalyst, various types of renewable energy such as solar energy, wind energy, hydroelectric energy, and geothermal energy can be used. The electrochemical reaction for performing the substance transformation includes those for reducing carbon dioxide, reducing nitrogen, decomposing a harmful substance, and generating a valuable substance such as hydrogen, carbon monoxide, methane, or alcohol, and new reaction has been developed.

Conventionally, the mechanism of the electrochemical reaction using the electrode catalyst is not sufficiently clarified. Catalyst action by the electrode catalyst has reaction selectivity. It is difficult to estimate, in advance, what type of reactant selectively reacts by a certain electrode catalyst and what type of product is selectively generated by a certain electrode catalyst. In many cases, the reaction selectivity of the electrode catalyst needs to be obtained experimentally.

For a process to be implemented, it is also difficult to estimate, e.g., a proper type of electrode catalyst, a proper type of electrolyte, and a proper reaction condition. Search has not been sufficiently conducted on, e.g., the type of electrode catalyst, the type of electrolyte, and the reaction condition, and reports by researchers are limited. Under current circumstances, a high-throughput screening method for searching the electrode catalyst and the electrochemical reaction condition has not been sufficiently prepared.

JP2007-532912A describes apparatus and method used for material development according to combinatorial chemistry. In these apparatus and method, a combinatorial reactor array having a plurality of chambers is used. During a reaction period in each chamber, a catalyst bulk structure and a catalyst surface structure are measured. The catalyst bulk structure and the catalyst surface structure are measured by optical spectroscopy.

Conventionally, as a technique of performing combinatorial screening for the electrochemical reaction, a technique using a probe-type electrochemical flow cell has been known. In the probe-type electrochemical flow cell, the electrochemical reaction is made by, e.g., cyclic voltammetry. A product generated by the electrochemical reaction is quantitated by, e.g., mass spectrometry.

### SUMMARY OF THE INVENTION

Currently, there has been demanded application of the electrochemical reaction using the electrode catalyst to, e.g., the substance transformation. In order to efficiently perform, e.g., the substance transformation, it is important to optimize the electrode catalyst used for the electrochemical reaction and the electrochemical reaction condition. Moreover, in order to efficiently perform, e.g., the substance transformation, there has been demanded a technique of searching the electrode catalyst and the electrochemical reaction condition with high throughput.

In JP2007-532912A, the catalyst bulk structure and the catalyst surface structure are measured for each chamber by optical spectroscopy. However, in the case of measurement by optical spectroscopy, there is a problem that electrochemical operation cannot be performed. The electrochemical potential of the catalyst cannot be changed, and for this reason, a search range is limited and it is difficult to sufficiently optimize the electrode catalyst and the electrochemical reaction condition.

In the technique using the conventional probe-type electrochemical flow cell, a gaseous product generated in the cell is analyzed. Using the electrochemical flow cell, the electrochemical operation can be performed. However, only the gaseous product discharged from the cell can be quantitated, and for this reason, the search range is limited and it is difficult to sufficiently optimize the electrode catalyst and the electrochemical reaction condition.

Moreover, in the technique using the electrochemical flow cell, the cell is re-used in a case of performing a plurality of tests. In a case of, e.g., applying high voltage, e.g., electrode-derived metal ions may adhere to the inside of the cell. Such an impurity remains in the cell, and may cause contamination between the tests. When the single cell is re-used, the electrode catalyst and the electrochemical reaction condition need to be changed for each test, and it takes time to implement the plurality of tests. Meanwhile, the flow cell is prepared for each test, and for this reason, this requires a device cost.

For these reasons, the present invention is intended to provide an electrochemical reaction system capable of simultaneously making plural types of electrochemical reaction by plural types of electrode catalysts in a single electrochemical cell to implement, across a wide range at high speed, generation of a substance by the electrochemical reaction using the electrode catalyst and search and optimization of the electrode catalyst and an electrochemical reaction condition.

In order to solve the above-described problems, the electrochemical reaction system according to the present invention includes an electrochemical cell having a first electrode functioning as a cathode, a second electrode functioning as an anode, and a chamber in which electrochemical reaction is made by the first electrode and the second electrode, a power supply apparatus that applies voltage between the first electrode and the second electrode, and a fluid supply apparatus that supplies fluid involved in the electrochemical reaction to the chamber. At least one of the first electrode or the second electrode is made of plural types of electrode materials different from each other in at least one of the composition of a material forming the electrode or the surface structure of the electrode. At least part of a wall surface of the chamber is made of the plural types of electrode materials.

According to the present invention, the electrochemical reaction system can be provided, which is capable of simultaneously making the plural types of electrochemical reaction by the plural types of electrode catalysts in the single electrochemical cell to implement, across a wide range at high speed, generation of a substance by the electrochemical reaction using the electrode catalyst and search and optimization of the electrode catalyst and the electrochemical reaction condition.

### BRIEF DESCRIPTION OF THE DRAWINGS

FIG. 1 is a view schematically showing an electrochemical reaction system according to a first embodiment;
FIG. 2A is a view showing one example of the structure of an electrochemical cell;
FIG. 2B is an exploded view showing one example of the electrochemical cell;
FIG. 3 is a graph for describing the configuration of an electrode catalyst for different material compositions;
FIG. 4 is a graph for describing the configuration of the electrode catalyst for different surface structures;
FIG. 5 is a view showing one example of the structure of the electrochemical cell;
FIG. 6 is a view showing one example of the structure of the electrochemical cell;
FIG. 7 is a view showing one example of the structure of the electrochemical cell;
FIG. 8 is a view showing one example of the structure of the electrochemical cell;
FIG. 9 is a view schematically showing an electrochemical reaction system according to a second embodiment;
FIG. 10 is an exploded view showing one example of the structure of an electrochemical cell;
FIG. 11 is an exploded view showing one example of the structure of the electrochemical cell; and
FIG. 12 is a view schematically showing an electrochemical reaction system according to a third embodiment.

### DESCRIPTION OF EMBODIMENTS

Hereinafter, an electrochemical reaction system according to one embodiment of the present invention will be described with reference to the figures. Note that the same reference numerals represent common components in each figure described below and overlapping description thereof will be omitted. In each figure described below, a black arrow indicates the flow of liquid-based fluid. Moreover, a white arrow indicates the flow of gas-based fluid.

### <First Embodiment>

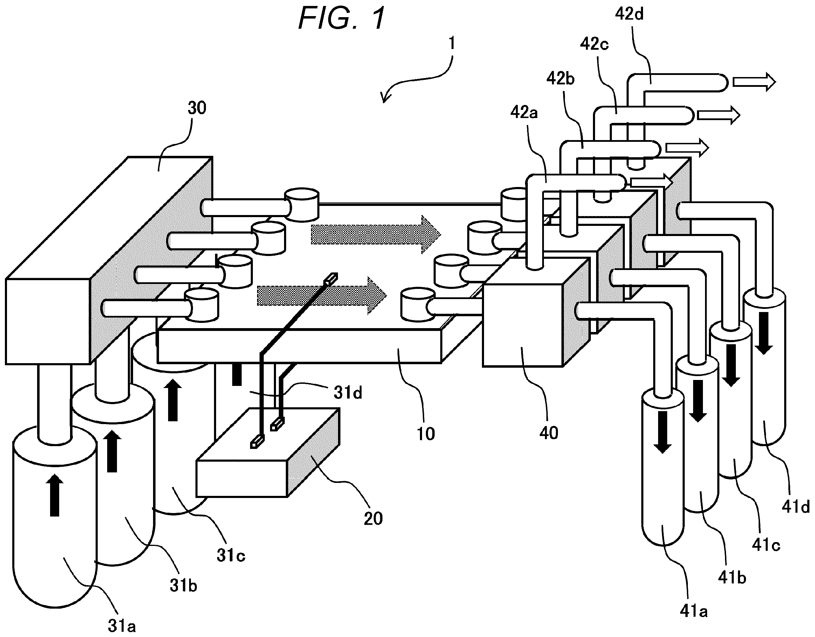

FIG. 1 is a view schematically showing an electrochemical reaction system according to a first embodiment.

As shown in FIG. 1, the electrochemical reaction system 1 according to the first embodiment includes an electrochemical cell 10, a power supply apparatus 20, a liquid supply apparatus 30, and a gas liquid separation mechanism 40.

The electrochemical reaction system 1 according to the first embodiment is a system that makes electrochemical reaction using an electrode catalyst. The electrochemical reaction system 1 is a multielectrode electrochemical reaction system including plural types of electrode catalysts in a single electrochemical cell 10. The electrode catalysts are made of plural types of electrode catalyst materials different from each other in a material composition or a surface structure. The plural types of electrode catalyst materials make plural types of electrochemical reaction in the single electrochemical cell 10.

The electrochemical reaction system 1 can be used for an arbitrary use application using the electrochemical reaction. The use application of the electrochemical reaction system 1 includes, e.g., a use application for producing a substance by the electrochemical reaction, a use application for treating or decomposing a substance by the electrochemical reaction, a use application for testing or evaluating an electrode catalyst and an electrochemical reaction condition, and a use application for screening a product according to an electrode catalyst and an electrochemical reaction condition.

For example, the electrochemical reaction system 1 can be used for, e.g., generating hydrogen and oxygen by electrolyzation of water, reducing carbon dioxide, and reducing nitrogen oxide (NOx) or sulfur oxide (SOx). Moreover, the electrochemical reaction system 1 can also be used for, e.g., synthesizing a low molecular such as hydrogen or carbon monoxide or an organic compound such as formic acid, methanol, ethanol, methane, or ethylene.

The electrochemical cell 10 has a first electrode functioning as a cathode, a second electrode functioning as an anode, and a chamber in which the electrochemical reaction is made by the first electrode and the second electrode. In the electrochemical cell 10, one or more chambers are formed as a space(s) where the electrochemical reaction is made. A supply flow path for supplying fluid involved in the electrochemical reaction and a discharge flow path for discharging fluid after the electrochemical reaction are connected to each chamber.

The electrochemical cell 10 can include an electrode catalyst as at least one of the first electrode or the second electrode. In the electrochemical reaction system 1, only the first electrode may be made of an electrode catalyst material, only the second electrode may be made of an electrode catalyst material, or both the first electrode and the second electrode may be made of electrode catalyst materials.

The electrochemical cell 10 can be supplied with fluid containing a reactant of the electrochemical reaction. The electrochemical cell 10 generates plural types of products such as a pure substance and a mixture from the reactant supplied to the chamber by the electrochemical reaction made using plural types of electrode catalyst materials as a catalyst. Plural types of products different from each other in at least one of a chemical composition forming a substance or a mixed composition forming a mixture can be generated. Fluid containing the product of the electrochemical reaction can be discharged from the chamber of the electrochemical cell 10 and be transferred to, e.g., the gas liquid separation mechanism 40. In the chamber, the reaction can be made such that the fluid continuously flows in and out.

In FIG. 1, two chambers are formed in total in the electrochemical cell 10. In each chamber, different types of electrochemical reaction are made by different types of electrode catalysts. Each chamber is divided into a cathode-side space and an anode-side space by a separator. The supply flow path and the discharge flow path can be separately connected to each space. In FIG. 1, for the two chambers in total, two supply flow paths and two discharge flow paths are connected to the cathode side, and two supply flow paths and two discharge flow paths are connected to the anode side.

The power supply apparatus 20 applies voltage for the electrochemical reaction between the electrodes of the electrochemical cell 10. The power supply apparatus 20 includes, e.g., a potentiostat. The power supply apparatus 20 is electrically connected to the first electrode of the electrochemical cell 10 functioning as the cathode, the second electrode of the electrochemical cell 10 functioning as the anode, and, e.g., a probe-type reference electrode installed in the electrochemical cell 10.

The power supply apparatus 20 preferably has, in addition to a function of controlling an electrode potential to a target value, a function of supplying constant voltage or constant current to the electrochemical cell 10, and a function of sweeping the electrode potential of the electrochemical cell 10, for example. By sweeping the electrode potential, plural types of electrochemical reaction can be made in the single electrochemical cell 10 according to the type of electrode catalyst material. The electrode catalyst and the electrochemical reaction condition can be searched across a wider range.

The liquid supply apparatus 30 supplies liquid involved in the electrochemical reaction to the chamber of the electrochemical cell 10. The liquid involved in the electrochemical reaction includes raw liquid containing a reactant of the electrochemical reaction, electrolyte liquid mediating charge transfer in the electrochemical reaction, and mixed liquid thereof. As the liquid involved in the electrochemical reaction, liquid with one type of chemical composition or mixed composition may be supplied, or liquid with plural types of chemical compositions or mixed compositions may be supplied.

The liquid supply apparatus 30 includes, e.g., a pump that supplies liquid and a valve that switches a liquid flow path. The liquid supply apparatus 30 can be connected to the electrochemical cell 10 through, e.g., a pipe or a port. The liquid involved in the electrochemical reaction may be supplied to each chamber of the electrochemical cell 10 so as to reach a preset target flow rate, or may be supplied with a variable flow rate changing within a preset range.

In FIG. 1, a first liquid supply container 31a, a second liquid supply container 31b, a third liquid supply container 31c, and a fourth liquid supply container 31d are connected to the liquid supply apparatuses 30. Different types of liquid different from each other in a composition can be prepared for the first liquid supply container 31a, the second liquid supply container 31b, the third liquid supply container 31c, and the fourth liquid supply container 31d. For example, raw material-electrolyte mixed liquid is prepared and supplied to each chamber so that the electrochemical reaction can be started only by voltage application between the electrodes.

In FIG. 1, the four liquid supply containers are connected in total, but an arbitrary number of containers that store the types of liquid different from each other in a chemical composition or a mixed composition can be connected as a liquid supply container. The liquid prepared for each liquid supply container may be supplied to each chamber at the same timing, or may be supplied at different timings. The liquid may be separately supplied to each chamber, or may be mixed and supplied to each chamber. By such supply, plural types of electrochemical reaction according to combinatorial chemistry can be made in the single electrochemical cell 10.

The gas liquid separation mechanism 40 separates the fluid discharged from each chamber of the electrochemical cell 10 into gas and liquid. The gas liquid separation mechanism 40 can be connected to the electrochemical cell 10 through, e.g., a pipe or a port. In the electrochemical reaction in each chamber, liquid may be generated from gas, or gas may be generated from liquid. Moreover, gas and liquid may flow into each chamber. According to the gas liquid separation mechanism 40, the mixed fluid discharged from each chamber can be provided for recovery or analysis after having been separated into gas and liquid.

The gas liquid separation mechanism 40 is preferably provided as a membrane separation apparatus including a hydrophobic porous membrane. The hydrophobic porous membrane is made of a porous material exhibiting hydrophobic properties. The hydrophobic porous membrane can be provided with an arbitrary structure such as the form of a flat membrane or a hollow fiber membrane. The material of the hydrophobic porous membrane includes, e.g., hydrophobic resin such as polytetrafluoroethylene, polyethylene, and polypropylene and a material obtained in such a manner that a porous material surface is modified to have hydrophobic properties.

According to the hydrophobic porous membrane, permeation of liquid such as water can be blocked while permeation of gas is allowed. Even in a case where both liquid and gas are present in the chamber of the electrochemical cell 10, the fluid after the electrochemical reaction can be provided for recovery or analysis after having been separated into gas and liquid. Thus, the productivity of a gaseous substance by the electrochemical reaction and the accuracy of evaluation of the electrode catalyst and the electrochemical reaction condition in a case where both liquid and gas are present can be improved.

In FIG. 1, a first liquid recovery container 41a, a second liquid recovery container 41b, a third liquid recovery container 41c, and a fourth liquid recovery container 41d are connected to the gas liquid separation mechanisms 40. Liquid discharged from the cathode side of each chamber or liquid discharged from the anode side of each chamber is recovered to each of the first liquid recovery container 41a, the second liquid recovery container 41b, the third liquid recovery container 41c, and the fourth liquid recovery container 41d after having been separated from gas.

A first gas recovery pipe 42a, a second gas recovery pipe 42b, a third gas recovery pipe 42c, and a fourth gas recovery pipe 42d are connected to the gas liquid separation mechanisms 40. Gas discharged from the cathode side of each chamber or gas discharged from the anode side of each chamber is transferred and recovered to each of the first gas recovery pipe 42a, the second gas recovery pipe 42b, the third gas recovery pipe 42c, and the fourth gas recovery pipe 42d after having been separated from liquid.

Note that in FIG. 1, the total of four liquid recovery containers and the total of four gas recovery pipes are connected to the total of two chambers divided by the separator, but an arbitrary number of liquid recovery containers and an arbitrary number of gas recovery pipes can be connected according to the number of spaces forming the chambers of the electrochemical cell 10. In a case where each chamber is not divided by the separator, one liquid recovery container and one gas recovery pipe can be connected to each chamber. In a case where both gas and liquid are not discharged from each chamber, the installation of the gas liquid separation mechanism 40 can be omitted.

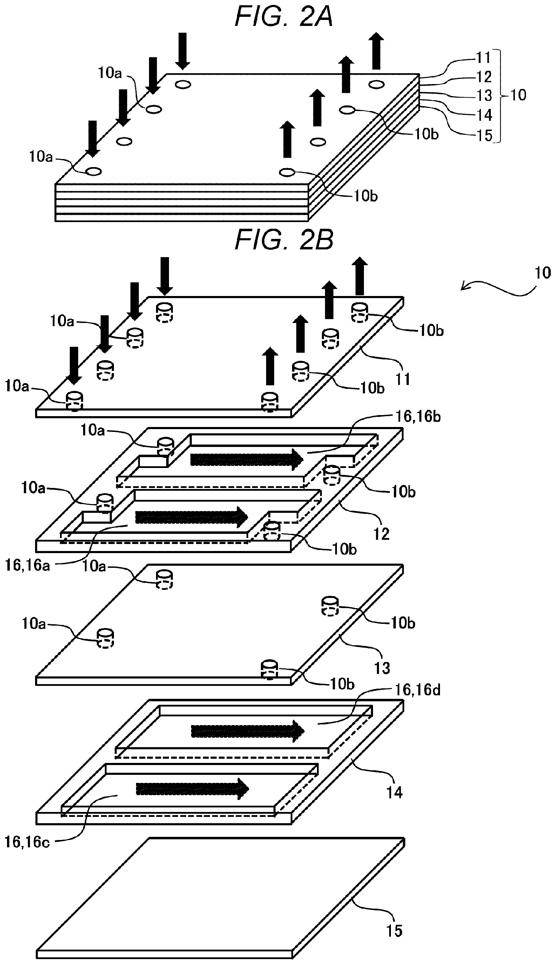

FIG. 2A is a view showing one example of the structure of the electrochemical cell. FIG. 2B is an exploded view showing one example of the structure of the electrochemical cell. FIG. 2A shows the assembled electrochemical cell 10 in the electrochemical reaction system 1. FIG. 2B shows the electrochemical cell 10 disassembled into components.

As shown in FIGS. 2A and 2B, the electrochemical cell 10 can be formed with a multilayer structure in which a first electrode member 11 forming the first electrode functioning as the cathode, a cathode-side flow path forming member 12 forming part of a wall surface of the chamber and a fluid flow path, a separator 13, an anode-side flow path forming member 14 forming part of the wall surface of the chamber and the fluid flow path, and a second electrode member 15 forming the second electrode functioning as the anode are stacked on each other in this order.

The components of the electrochemical cell 10 can be joined to each other by an arbitrary joining method such as welding, pressure-bonding, thermocompression bonding, sintering, diffusion joining, joining with solder or an adhesive, or joining with a joining component such as a screw or a gripping component. In addition to each component, the electrochemical cell 10 may include, e.g., a cell housing in which the components are assembled with each other, a holder that supports the components, and a seal that seals a clearance between the components.

In FIGS. 2A and 2B, the electrochemical cell 10 is provided with a structure having two chambers 16 in total. As the chambers 16, a first chamber (16a, 16c) and a second chamber (16b, 16d) are provided in parallel. In each of the first chamber (16a, 16c) and the second chamber (16b, 16d), different types of electrochemical reaction are made using different types of electrode catalysts.

Each of the first chamber (16a, 16c) and the second chamber (16b, 16d) is divided into a cathode-side space and an anode-side space by the separator 13. The first chamber (16a, 16c) is formed by a first cathode space 16a and a first anode space 16c. The second chamber (16b, 16d) is formed by a second cathode space 16b and a second anode space 16d.

As shown in FIGS. 2A and 2B, in each chamber 16, a supply flow path 10a and a discharge flow path 10b are connected to each of the cathode-side space 16a, 16b and the anode-side space 16c, 16d. The supply flow path 10a and the discharge flow path 10b are formed by a through-hole provided in each component of the electrochemical cell 10 and a pipe or port connected to the electrochemical cell 10.

The supply flow path 10a is a flow path for supplying fluid from the outside of the electrochemical cell 10 into the chamber 16. The supply flow path 10a allows the liquid supply apparatus 30 and the cathode-side space 16a, 16b of each chamber 16 to communicate with each other, and allows the liquid supply apparatus 30 and the anode-side space 16c, 16d of each chamber 16 to communicate with each other.

The discharge flow path 10b is a flow path for discharging fluid from the inside of the chamber 16 to the outside of the electrochemical cell 10. The discharge flow path 10b allows the cathode-side space 16a, 16b of each chamber 16 to communicate with the gas liquid separation mechanism 40 or the outside of the electrochemical reaction system 1, and allows the anode-side space 16c, 16d of each chamber 16 to communicate with the gas liquid separation mechanism 40 or the outside of the electrochemical reaction system 1.

In the electrochemical reaction system 1, the liquid supply apparatus 30 can supply the liquid involved in the electrochemical reaction to the cathode-side space 16a and anode-side space 16c of the first chamber (16a, 16c) and the cathode-side space 16b and anode-side space 16d of the second chamber (16b, 16d).

In the electrochemical cell 10, the electrochemical reaction of supplied liquid is made. A reactant is transformed into a product by the electrochemical reaction made using the electrode catalyst. In the electrochemical cell 10, e.g., electrochemical reaction using liquid as a reactant or electrochemical reaction under the presence of liquid can be made.

After the electrochemical reaction in each chamber 16, the liquid from the cathode-side space 16a and anode-side space 16c of the first chamber (16a, 16c) and the liquid from the cathode-side space 16b and anode-side space 16d of the second chamber (16b, 16d) can be separately recovered through, e.g., the gas liquid separation mechanisms 40.

The first electrode member 11 and the second electrode member 15 can be formed in a flat plate shape from, e.g., an electrode material. A relationship between the first electrode member 11 and the second electrode member 15 in the up-down direction are not particularly limited. The first electrode member 11 may be arranged on the upper side in the electrochemical cell 10, or the second electrode member 15 may be arranged on the upper side in the electrochemical cell 10.

The cathode-side flow path forming member 12 and the anode-side flow path forming member 14 can be formed in a flat plate shape from an electric insulating material. A space forming the chamber 16 can be provided as a through-hole penetrating the flow path forming member 12, 14 and having an arbitrary shape. The through-holes of the cathode-side flow path forming member 12 and the anode-side flow path forming member 14 are closed by stacking the first electrode member 11 and the second electrode member 15 thereon.

The separator 13 can be formed in a flat plate shape or a flat membrane shape from an ion-exchange membrane, for example. The separator 13 separates the inside of the chamber into the cathode-side space and the anode-side space. With the separator 13, ion conductivity can be ensured while transfer of a substance such as a reactant or a product and electron conduction are reduced.

Note that in FIGS. 2A and 2B, the supply flow path 10a and the discharge flow path 10b are formed in the first electrode member 11, but may be formed in the second electrode member 15 as long as the chamber 16 communicates with, e.g., the liquid supply apparatus 30 and the gas liquid separation mechanism 40. Alternatively, the supply flow path 10a and the discharge flow path 10b may be formed in, e.g., a side surface of the electrochemical cell 10 instead of the upper or lower surface of the electrochemical cell 10.

The installation of the separator 13 may be omitted as long as concentration polarization on the cathode side and the anode side can be ensured. In a case where the installation of the separator 13 is omitted, the electrochemical cell 10 can be formed in such a manner that the first electrode member, the flow path forming member, and the second electrode member are stacked on each other in this order. The first electrode member, the flow path forming member, and the second electrode member and the chamber and flow path formed thereby can be provided with arbitrary shapes allowing the flow of the fluid involved in the electrochemical reaction.

In the electrochemical reaction system 1, at least one of the first electrode or the second electrode is provided as an electrode catalyst. At least one of the first electrode or the second electrode is made of plural types of electrode catalyst materials different from each other in at least one of the composition of a material forming the electrode or the surface structure of the electrode. The plural types of electrode catalyst materials may be different from each other in only the material composition, only the surface structure, or both.

In the electrochemical reaction system 1, at least part of a wall surface of the chamber 16 is made of plural types of electrode catalyst materials in the single electrochemical cell 10. At least one of the first electrode member 11 or the second electrode member 15 can be made of plural types of electrode catalyst materials. Such a first electrode member 11 or second electrode member 15 can be arranged with exposed to the space forming the chamber 16.

As shown in FIG. 2B, the space forming the chamber 16 of the electrochemical cell 10 is provided as the through-hole penetrating the flow path forming member 12, 14. Moreover, the first electrode member 11 and the second electrode member 15 are stacked so as to close the through-holes of the flow path forming members 12, 14. Thus, the chamber 16 can be formed with the flow path forming members 12, 14 as side surfaces and the first electrode member 11 and the second electrode member 15 as upper and lower surfaces.

Thus, the surface side of the first electrode member 11 or the second electrode member 15 is made of plural types of electrode catalyst materials so that the multielectrode electrochemical reaction system including the plural types of electrode catalysts in the single electrochemical cell 10 can be built. Depending on design such as the structures of the first electrode member 11 and the second electrode member 15 and the shape of the through-hole, the type of electrode catalyst material contacting fluid in the chamber and the order of fluid contacting the electrode catalyst material can be changed.

In the electrochemical reaction system 1, for one electrochemical cell 10, a wall surface of one chamber 16 may be made of plural types of electrode catalyst materials, or wall surfaces of a plurality of chambers 16 may be made of plural types of electrode catalyst materials. When the wall surface of the one chamber 16 is made of the plural types of electrode catalyst materials, the reaction can be continuously made in multiple stages according to the type of electrode catalyst. When the wall surfaces of the plurality of chambers 16 are made of the plural types of electrode catalyst materials, plural types of reaction can be made in parallel at once according to the type of electrode catalyst.

In the electrochemical cell 10, plural types of electrochemical reaction can be made at once or continuously according to the electrode catalyst material. Using the plural types of electrode catalyst materials, a reactant supplied to the chamber 16 can be transformed into products different from each other in a chemical composition or a mixed composition. Moreover, the plural types of electrochemical reaction allow, e.g., search of proper reaction condition and reaction path, test or evaluation of the electrode catalyst and the electrochemical reaction condition, screening of a substance according to the electrode catalyst and the electrochemical reaction condition, and generation of many types of arbitrary compounds by application of results thereof.

Note that in FIGS. 1, 2A, and 2B, the electrochemical cell 10 includes the total of two chambers divided by the separator, but can include an arbitrary number of chambers. The supply flow path and the discharge flow path can be connected to each chamber at arbitrary connection positions by an arbitrary connection structure. The electrochemical reaction system 1 may include one electrochemical cell 10 or a plurality of electrochemical cells 10.

The electrode catalyst material forming the electrode catalyst can be formed in, e.g., a plate shape, a sheet shape, or a membrane shape. Moreover, the electrode catalyst material can be, as, e.g., a powder mixture or a pellet, combined with a carrier or a conductive material or fixed to an electrode material surface as necessary. The surface of the electrode catalyst material may be modified with a promoter for promoting the reaction. An arbitrary material can be used as the electrode catalyst material forming the electrode catalyst as long as the material has conductivity and exhibits electrochemical catalyst activity.

The electrode catalyst material includes, for example, C, Al, Si, Mg, Ti, V, Cr, Mn, Fe, Co, Ni, Cu, Zn, Ga, Sr, Y, Zr, Nb, Mo, Ru, Rh, Pd, Ag, Cd, In, Sn, Sb, Te, Ba, Hf, Ta, W, Re, Ir, Pt, Au, Pb, Bi, La, Ce, Pr, Nd, Sm, Gd, Tb, Dy, Ho, and Yb, alloys thereof, and compounds thereof.

Specific examples of the compound of the electrode catalyst material include TiO₂, SrTiO₃, SrTiO₂N, BaTaO₂N, NaTaO₃, WO₃, ZnO, Fe₂O₃, CuO, Ta₂O₅, Bi₂O₃, SnO₂, BiVO₄, Y₂Ti₂O₅S₂, IrO₂, MnO, and CoO. The promoter to be used may include, e.g., Pt, Ru, Rh, Au, and Ir and compounds thereof.

The carrier includes, e.g., a carbon material such as activated carbon, black lead, carbon black, and graphene, fluorine resin such as polytetrafluoroethylene, and an inorganic material such as aluminum oxide, titanium oxide, zirconium oxide, magnesium oxide, silicon oxide, and zeolite. The conductive material to be used may include, e.g., a carbon material. The electrode material includes, e.g., stainless steel, copper, nickel, chromium, platinum, silver, gold, aluminum, and glassy carbon.

The material forming the flow path forming member includes, e.g., a glass material such as quartz glass and borosilicate glass, a resin material such as polyethylene, polypropylene, polystyrene, polycarbonate, polyester, polyimide, polysiloxane, acrylic resin, and fluorine resin, an inorganic material such as silicon, alumina, zirconia, ceria, and silicon carbide, and a metal material such as stainless steel and hastelloy. The flow path forming member can be electrically insulated by an arbitrary method such as formation of an oxide membrane or interposition of an insulating material.

The material forming the separator includes, e.g., a resin material or a porous material into which a cation-exchange group or an anion-exchange group is introduced. The cation-exchange group includes, e.g., a sulfone acid group, an imide group, a sulfonimide group, a sulfonamide group, a carboxyl group, a carboxymethyl group, and a phosphoric acid group. The anion-exchange group includes, e.g., a quaternary ammonium cation group, a tertiary amino group such as a trimethylamine group and a diethylaminoethyl group, a secondary amino group, a primary amino group, a pyridyl group, and an imidazole group.

The resin material includes, e.g., fluorine-based resin such as polytetrafluoroethylene and polyvinylidene fluoride, styrene-based resin such as styrene-divinylbenzene copolymer, polyolefin such as polyethylene and polypropylene, polyester, polycarbonate, polyamide, polyimide, polyamide-imide, polyether, polyetherimide, polyetherketone, and polyetheretherketone. The porous material includes, e.g., non-woven fabric and a porous film.

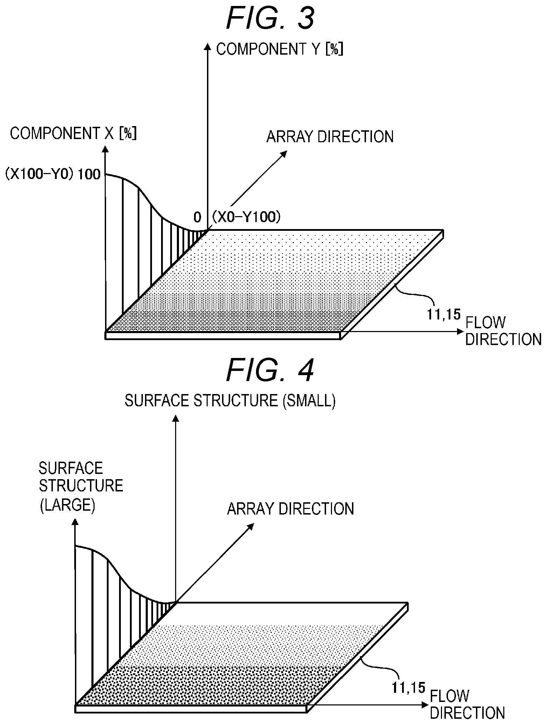

FIG. 3 is a graph for describing the configuration of the electrode catalyst for different material compositions. FIG. 3 shows one example of the configuration of the electrode catalyst when the composition of the material forming the first electrode member 11 or the second electrode member 15 is changed along one axial direction. In FIG. 3, the horizontal axis indicates the flow direction of the fluid involved in the electrochemical reaction with respect to the electrode member 11, 15. The diagonal axis indicates the array direction of the plurality of chambers 16 with respect to the electrode member 11, 15. The vertical axis indicates the component percentage of the material forming the electrode member 11, 15.

As shown in FIG. 3, at least one of the first electrode or the second electrode provided as an electrode catalyst can be made of plural types of electrode catalyst materials different from each other in a material composition. FIG. 3 shows a concentration gradient structure in which the component percentage of the electrode catalyst material changes along the array direction of the chambers 16. An example of binary alloy containing an X component and a Y component, such as Cu-Ag alloy, is shown.

In FIG. 3, one side in the array direction of the chambers 16 is made of an electrode catalyst material containing an X component of 100% and a Y component of 0%. The other side in the array direction of the chambers 16 is made of an electrode catalyst material containing an X component of 0% and a Y component of 100%. An intermediate portion in the array direction of the chambers 16 has an intermediate composition including both the X component and the Y component.

At least one of the first electrode or second electrode of the electrochemical reaction system 1 can be formed with an arbitrary number of types of material compositions. The electrode catalyst material may be a pure substance, a mixture of a plurality of substances, or a compound obtained by compounding a plurality of substances into a predetermined structure, such as a supported catalyst. The electrode catalyst material may vary according to a chemical composition, vary according to the mixed composition of a mixture, or vary according to the structure and composition of a compound.

The method to be used to change the composition of the material forming the electrode may include, e.g., a method of diffusing, impregnating, or thickening a component forming the electrode catalyst material by laser ablation or atomic diffusion thermal treatment, a method of patterning different electrode catalyst materials on an electrode material by spotting or ink jetting, and a method of joining electrode members made of different electrode catalyst materials by fusion welding.

FIG. 4 is a graph for describing the configuration of the electrode catalyst for different surface structures. FIG. 4 shows one example of the configuration of the electrode catalyst when the surface structure of the first electrode member 11 or the second electrode member 15 is changed along one axial direction. In FIG. 4, the horizontal axis indicates the flow direction of the fluid involved in the electrochemical reaction with respect to the electrode member 11, 15. The diagonal axis indicates the array direction of the plurality of chambers 16 with respect to the electrode member 11, 15. The vertical axis indicates an amount related to the surface structure of the electrode member 11, 15.

As shown in FIG. 4, at least one of the first electrode or the second electrode provided as an electrode catalyst can be made of plural types of electrode catalyst materials different from each other in a surface structure. FIG. 4 shows an electrode with a texture gradient structure in which the surface structure of the electrode catalyst material changes along the array direction of the chambers 16.

In FIG. 4, one side in the array direction of the chambers 16 is made of an electrode catalyst material having a larger surface structure. The other side in the array direction of the chambers 16 is made of an electrode catalyst material having a smaller surface structure. An intermediate portion in the array direction of the chambers 16 is made of an electrode catalyst material having an intermediate surface structure.

At least one of the first electrode or second electrode of the electrochemical reaction system 1 can be formed with an arbitrary number of types of surface structures. The surface structure of the electrode includes a structure influencing, e.g., a surface roughness, a maximum surface height, and a surface area and identified by a three-dimensional surface shape. The surface structure of the electrode may be a macrostructure visible with the eyes or a microstructure observable with a microscope. Alternatively, the surface structure may be a naturally-formed structure or an artificially-formed structure.

The surface structure of the electrode includes, e.g., protrusions and recesses formed by polishing or roughening, a microtexture formed by microfabrication with a laser, and a three-dimensional macro shape formed by machining or etching. Specific examples of the surface structure include a structure in which dot-shaped pits, dot-shaped protrusions, linear grooves, linear projections, hemispherical protrusions and recesses, triangular pyramidal protrusions and recesses, or quadrangular pyramidal protrusions and recesses are arrayed. The surface structure may be regularly or irregularly arranged, e.g., in columns or matrix.

The first electrode member or the second electrode member can be made of the plural types of electrode catalyst materials different from each other in the material composition as shown in FIG. 3 or the plural types of electrode catalyst materials different from each other in the surface structure as shown in FIG. 4. In the electrochemical reaction system 1, at least one of the first electrode member or the second electrode member is provided with the gradient structure in which at least one of the composition of the material forming the electrode or the surface structure of the electrode changes in a creeping direction along the first electrode member, the flow path forming member, and the second electrode member.

As described above, the first electrode member and the second electrode member can be stacked on the flow path forming member in such an orientation that the chamber array direction and the electrode catalyst material array direction are coincident with each other. The plurality of chambers can be arrayed in a direction perpendicular to the flow direction of the fluid involved in the electrochemical reaction.

The composition of the material forming the electrode catalyst or the surface structure of the electrode catalyst may be continuously changed along the chamber array direction, or may be changed in a stepwise manner along the chamber array direction. The direction of change along the chamber array direction is not limited to one direction. For example, the electrode may be provided with mountain-shaped distribution in which the maximum value is at the intermediate portion, valley-shaped distribution in which the maximum value is on each end side, or distribution with no regularity, except for the distribution in which the maximum value is on the one side as in FIGS. 3 and 4.

The composition of the material forming the electrode catalyst or the surface structure of the electrode catalyst may be changed along one axial direction, or may be changed along two axial directions. For example, in addition to the direction perpendicular to the flow direction of the fluid involved in the electrochemical reaction as in FIGS. 3 and 4, the change may be made along a direction parallel with the flow direction of the fluid involved in the electrochemical reaction.

The composition of the material forming the electrode catalyst or the surface structure of the electrode catalyst may be changed in units of cells obtained by segmentalization of the surface of the electrode catalyst. In each cell, the material composition or the surface structure may be regularly changed in, e.g., ascending or descending order, or may be irregularly changed. The cells may be electrically separated from each other, or may be electrically connected to each other. The material composition or the surface structure is not necessarily different among all the cells, and may be the same among some cells.

According to the electrochemical reaction system 1, at least one of the first electrode or the second electrode is made of the plural types of electrode catalyst materials, and at least part of the wall surface of the chamber is made of the plural types of electrode catalyst materials. Thus, the plural types of electrochemical reaction can be made in the single electrochemical cell. Unlike a case of using a conventional probe-type electrochemical flow cell, both liquid and gas can be recovered after the electrochemical reaction. Moreover, re-use of the electrode catalyst can be avoided, and therefore, contamination due to a remaining impurity can be reduced. Further, in the chamber in which the electrode catalyst material is exposed, multi-stage reaction made using different types of electrode catalyst materials or plural types of reaction made in parallel using different types of electrode catalyst materials can be made with high throughput. Thus, by simultaneously making the plural types of electrochemical reaction using the plural types of electrode catalysts in the single electrochemical cell, generation of plural types of substances by the electrochemical reaction using the electrode catalyst and search and optimization of the electrode catalyst and the electrochemical reaction condition can be implemented across a wide range of substance and condition at high speed.

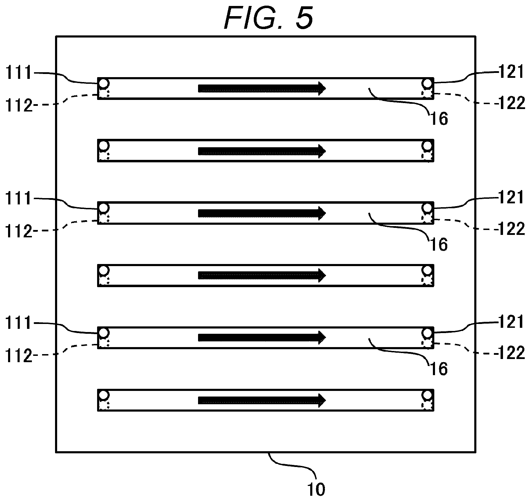

FIG. 5 is a view showing one example of the structure of the electrochemical cell. FIG. 5 shows a structure example related to the shape of the chamber 16 of the electrochemical cell 10 in the electrochemical reaction system 1. In FIG. 5, a reference numeral 111 indicates a cathode-side supply flow path for supplying catholyte, a reference numeral 112 indicates an anode-side supply flow path for supplying anolyte, a reference numeral 121 indicates a cathode-side discharge flow path for discharging catholyte, and a reference numeral 122 indicates an anode-side discharge flow path for discharging anolyte.

As shown in FIG. 5, the chamber 16 can be formed in a linear shape forming a linear flow path. The plurality of chambers 16 forms independent spaces not communicating with each other. The plurality of chambers 16 can be arrayed in parallel. A space forming the linear chamber 16 is arranged so as to extend in one axial direction parallel with the creeping direction along the first electrode member, the flow path forming member, and the second electrode member.

The type of electrode catalyst material may be changed in one axial direction parallel with the creeping direction along the electrochemical cell 10, or may be changed in two axial directions parallel with the creeping direction. The linear chamber 16 can be arranged in the electrode catalyst material array direction such that the material composition or the surface structure is different between the upstream side and the downstream side. The width and length of the linear chamber 16 are not particularly limited.

The cathode-side supply flow path 111 and the anode-side supply flow path 112 can be connected to one end side of each chamber 16, and the cathode-side discharge flow path 121 and the anode-side discharge flow path 122 can be connected to the other end side. The cathode-side supply flow path 111 and the cathode-side discharge flow path 121 and the anode-side supply flow path 112 and the anode-side discharge flow path 122 can be connected on both front and back sides with the separator parallel with the principal surface of the electrochemical cell 10 interposed therebetween.

According to the structure shown in FIG. 5, the array direction of the chambers 16 and the electrode catalyst material array direction are coincident with each other, and therefore, the electrode catalyst material can be different among the chambers 16. Thus, in the chambers 16 arrayed in parallel, plural types of electrochemical reaction different from each other in the electrode catalyst type and the reaction condition can be made.

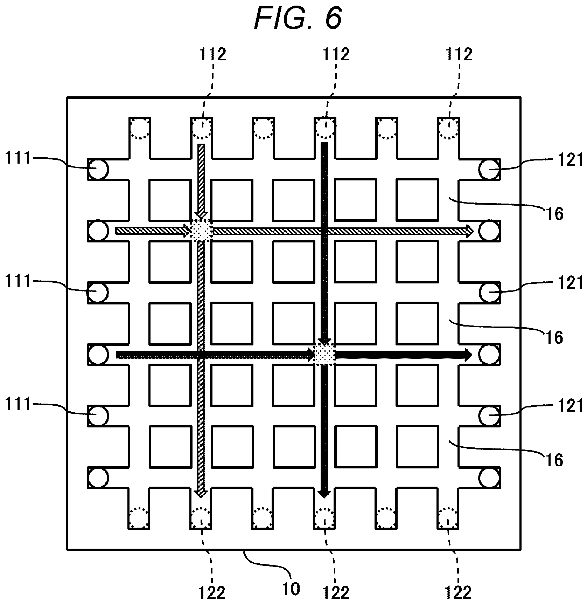

FIG. 6 is a view showing one example of the structure of the electrochemical cell. FIG. 6 shows a structure example related to the shape of the chamber 16 of the electrochemical cell 10 in the electrochemical reaction system 1. In FIG. 6, a reference numeral 111 indicates a cathode-side supply flow path for supplying catholyte, a reference numeral 112 indicates an anode-side supply flow path for supplying anolyte, a reference numeral 121 indicates a cathode-side discharge flow path for discharging catholyte, and a reference numeral 122 indicates an anode-side discharge flow path for discharging anolyte. An arrow indicates the pre-reaction and post-reaction flow of the fluid involved in the electrochemical reaction.

As shown in FIG. 6, the chambers 16 can be provided in matrix such that a plurality of linear spaces forming linear flow paths cross each other. The plurality of chambers 16 forms a communicating continuous space. The space forming the chambers 16 in matrix is arranged so as to extend in a plurality of axial directions parallel with the creeping direction along the first electrode member, the flow path forming member, and the second electrode member.

The type of electrode catalyst material can be changed in two axial directions parallel with the principal surface of the electrochemical cell 10. The chambers 16 in matrix can be arranged in the electrode catalyst material array directions such that a space forming each line, a space forming each column, and each intersection region between the line and the column contact the electrode catalyst materials different from each other in the material composition or the surface structure. The numbers of lines and columns of the chambers 16 in matrix are not particularly limited.

The cathode-side supply flow path 111 can be connected to one end side of the space forming each line, and the cathode-side discharge flow path 121 can be connected to the other end side. The anode-side supply flow path 112 can be connected to one end side of the space forming each column, and the anode-side discharge flow path 122 can be connected to the other end side. The cathode-side supply flow path 111 and the cathode-side discharge flow path 121 and the anode-side supply flow path 112 and the anode-side discharge flow path 122 can be connected on both front and back sides with the separator parallel with the principal surface of the electrochemical cell 10 interposed therebetween.

Among the space forming each line and the space forming each column, an arbitrary line or column of the chambers 16 in matrix can be selectively supplied with the fluid involved in the electrochemical reaction. The space forming each line or the space forming each column may be provided with, e.g., an inclination, a rib, or a partial partition such that the fluid involved in the electrochemical reaction flows in one direction. Reaction between the cathode-side fluid and the anode-side fluid can be made in the intersection region between the line and the column, for example.

According to the structure shown in FIG. 6, the array directions of the chambers 16 and the electrode catalyst material array directions are coincident with each other, and therefore, the electrode catalyst material can be different among the space forming each line, the space forming each column, and the intersection region between the line and the column. Thus, in the chambers 16 arrayed in matrix, plural types of electrochemical reaction different from each other in the electrode catalyst type and the reaction condition can be made. Since the chambers 16 are in matrix, the numbers of inlets and outlets and a flow path area in plan view can be reduced and the electrochemical cell 10 can be reduced in size for reaction between various types of fluid.

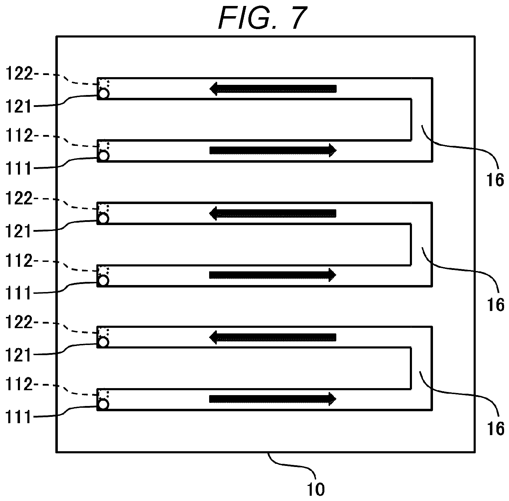

FIG. 7 is a view showing one example of the structure of the electrochemical cell. FIG. 7 shows a structure example related to the shape of the chamber 16 of the electrochemical cell 10 in the electrochemical reaction system 1. In FIG. 7, a reference numeral 111 indicates a cathode-side supply flow path for supplying catholyte, a reference numeral 112 indicates an anode-side supply flow path for supplying anolyte, a reference numeral 121 indicates a cathode-side discharge flow path for discharging catholyte, and a reference numeral 122 indicates an anode-side discharge flow path for discharging anolyte.

As shown in FIG. 7, the chamber 16 can be formed in a bent shape forming a flow path extending in two axial directions. The plurality of chambers 16 forms independent spaces not communicating with each other. The bent chambers 16 may be arrayed in parallel, or may be arranged at different positions. A space forming the bent chamber 16 is arranged so as to extend in a plurality of axial directions parallel with the creeping direction along the first electrode member, the flow path forming member, and the second electrode member.

The type of electrode catalyst material can be changed in two axial directions parallel with the principal surface of the electrochemical cell 10. The bent chamber 16 can extend in regions different from each other in the type of electrode catalyst material such that the material composition or the surface structure is different between the upstream side and the downstream side. The shape and extension direction of the bent chamber 16 are not particularly limited.

The cathode-side supply flow path 111 and the anode-side supply flow path 112 can be connected to one end side of each chamber 16, and the cathode-side discharge flow path 121 and the anode-side discharge flow path 122 can be connected to the other end side. The cathode-side supply flow path 111 and the cathode-side discharge flow path 121 and the anode-side supply flow path 112 and the anode-side discharge flow path 122 can be connected on both front and back sides with the separator parallel with the principal surface of the electrochemical cell 10 interposed therebetween.

According to the structure shown in FIG. 7, the array direction and extension directions of the chambers 16 and the electrode catalyst material array directions are coincident with each other, and therefore, the electrode catalyst material can be different among the chambers 16. Thus, according to the bent chamber 16 and the extension direction of the chamber 16, plural types of electrochemical reaction different from each other in the electrode catalyst type and the reaction condition can be made. Since the type of electrode catalyst material varies according to the extension direction of the chamber 16, various types of multi-stage reaction can be made in each chamber 16.

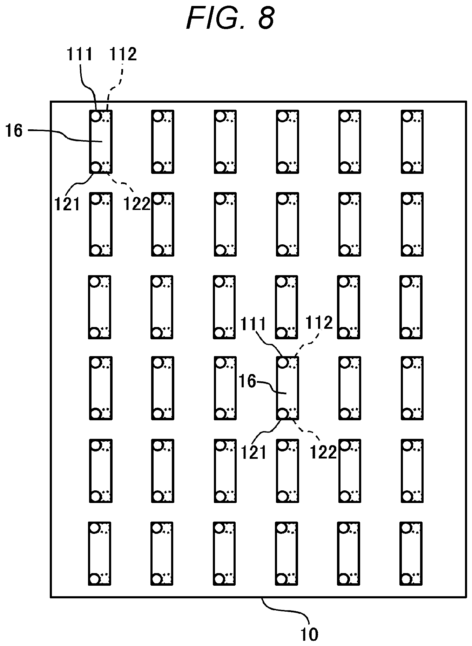

FIG. 8 is a view showing one example of the structure of the electrochemical cell. FIG. 8 shows a structure example related to the shape of the chamber 16 of the electrochemical cell 10 in the electrochemical reaction system 1. In FIG. 8, a reference numeral 111 indicates a cathode-side supply flow path for supplying catholyte, a reference numeral 112 indicates an anode-side supply flow path for supplying anolyte, a reference numeral 121 indicates a cathode-side discharge flow path for discharging catholyte, and a reference numeral 122 indicates an anode-side discharge flow path for discharging anolyte.

As shown in FIG. 8, the chambers 16 can be provided in matrix such that a plurality of spaces is arrayed in two axial directions. The plurality of chambers 16 forms independent spaces not communicating with each other. A space forming each of the chambers 16 arrayed in matrix is arranged so as to extend in one axial direction parallel with the creeping direction along the first electrode member, the flow path forming member, and the second electrode member.

The type of electrode catalyst material can be changed in two axial directions parallel with the principal surface of the electrochemical cell 10. The chambers 16 arrayed in matrix can be arranged in the electrode catalyst material array directions such that a space forming each line and a space forming each column contact the electrode catalyst materials different from each other in the material composition or the surface structure. The numbers of lines and columns of the chambers 16 arrayed in matrix and the shape of the chamber 16 are not particularly limited.

The cathode-side supply flow path 111 and the anode-side supply flow path 112 can be connected to one end side of each chamber 16, and the cathode-side discharge flow path 121 and the anode-side discharge flow path 122 can be connected to the other end side. The cathode-side supply flow path 111 and the cathode-side discharge flow path 121 and the anode-side supply flow path 112 and the anode-side discharge flow path 122 can be connected on both front and back sides with the separator parallel with the principal surface of the electrochemical cell 10 interposed therebetween.

Among the chamber 16 forming each line and the chamber 16 forming each column, an arbitrary line or column of the chambers 16 arrayed in matrix can be selectively supplied with the fluid involved in the electrochemical reaction. The chambers 16 arrayed in matrix can also be connected in series or in parallel. The chambers 16 connected to each other may be arranged adjacent to each other, or may not be arranged adjacent to each other.

According to the structure shown in FIG. 8, the array directions of the chambers 16 and the electrode catalyst material array directions are coincident with each other, and therefore, the electrode catalyst material can be different among the chamber 16 forming each line and the chamber 16 forming each column. Thus, in the chambers 16 arrayed in matrix and connection paths between the chambers 16, plural types of electrochemical reaction different from each other in the electrode catalyst type and the reaction condition can be made. Since the type of electrode catalyst material can be changed according to the connection path between the chambers 16, various types of multi-stage reaction can be made in each connection path.

### <Second Embodiment>

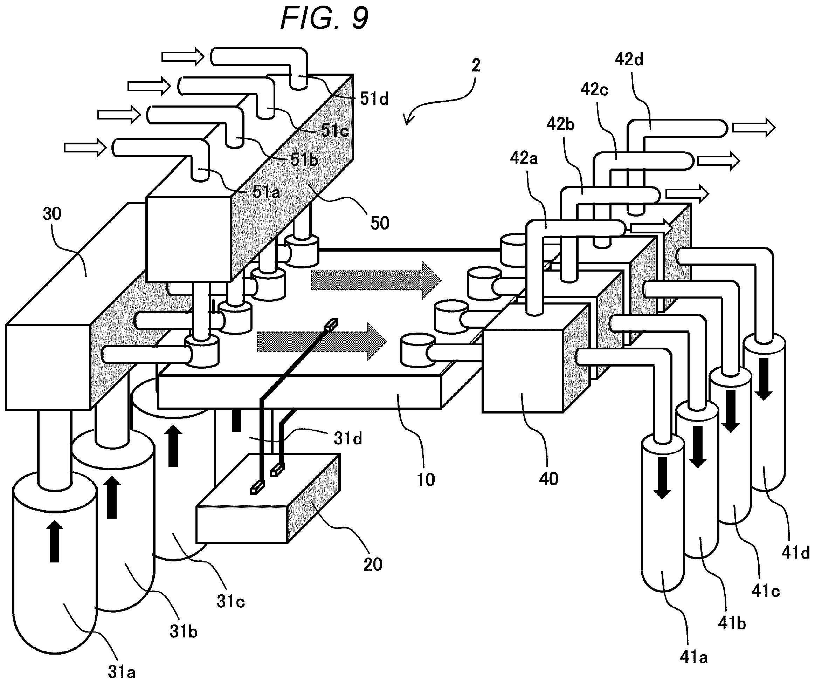

FIG. 9 is a view schematically showing an electrochemical reaction system according to a second embodiment.

As shown in FIG. 9, the electrochemical reaction system 2 according to the second embodiment includes an electrochemical cell 10, a power supply apparatus 20, a liquid supply apparatus 30, and a gas liquid separation mechanism 40 as in the electrochemical reaction system 1.

The electrochemical reaction system 2 according to the second embodiment is a system that makes electrochemical reaction using an electrode catalyst as in the electrochemical reaction system 1. The electrochemical reaction system 2 is different from the electrochemical reaction system 1 in that a gas supply apparatus 50 is additionally provided. Other main components of the electrochemical reaction system 2 are similar to those of the electrochemical reaction system 1.

The gas supply apparatus 50 supplies gas involved in the electrochemical reaction to chambers of the electrochemical cell 10. The gas involved in the electrochemical reaction includes, e.g., raw gas containing a reactant of the electrochemical reaction, pH control gas for controlling a pH in the electrochemical reaction, and atmosphere gas in the electrochemical reaction, such as inert gas. As the gas involved in the electrochemical reaction, gas with one type of chemical composition or mixed composition may be supplied, or gas with plural types of chemical compositions or mixed compositions may be supplied. The gas involved in the electrochemical reaction may be supplied alone, or may be supplied with mixed with liquid at an arbitrary mixing ratio.

The gas supply apparatus 50 includes, e.g., a pump that supplies gas and a valve that switches a gas flow path. The gas supply apparatus 50 can be connected to the electrochemical cell 10 through, e.g., a pipe or a port. The gas involved in the electrochemical reaction may be supplied to each chamber of the electrochemical cell 10 so as to reach a preset target flow rate, or may be supplied with a variable flow rate changing within a preset range.

In FIG. 5, a first gas supply pipe 51a, a second gas supply pipe 51b, a third gas supply pipe 51c, and a fourth gas supply pipe 51d are connected to the gas supply apparatus 50. The types of gas different from each other in a composition can be supplied from the outside to the first gas supply pipe 51a, the second gas supply pipe 51b, the third gas supply pipe 51c, and the fourth gas supply pipe 51d.

In FIG. 5, the four gas supply pipes are connected in total, but an arbitrary number of pipes for supplying the types of gas different from each other in a chemical composition or a mixed composition can be connected as a gas supply pipe. The gas supplied from each gas supply pipe may be supplied to each chamber at the same timing, or may be supplied at different timings. The gas may be separately supplied to each chamber, or may be mixed and supplied to each chamber. Alternatively, the gas may be mixed with liquid and supplied to each chamber. By supplying the gas alone, the mixed gas, or the gas-liquid mixed fluid, plural types of electrochemical reaction according to combinatorial chemistry can be made in the single electrochemical cell 10.

According to the electrochemical reaction system 2, at least one of a first electrode or a second electrode is made of plural types of electrode catalyst materials, at least part of a wall surface of the chamber is made of plural types of electrode catalyst materials, and liquid and gas are supplied to the electrochemical cell. Thus, plural types of electrochemical reaction involving liquid and gas can be made in the single electrochemical cell. Unlike a case of using a conventional probe-type electrochemical flow cell, a gas condition can be controlled, and both liquid and gas can be recovered after the electrochemical reaction. Thus, by simultaneously making the plural types of electrochemical reaction involving liquid and gas by using the plural types of electrode catalysts in the single electrochemical cell, generation of plural types of substances by the electrochemical reaction made using the electrode catalyst and search and optimization of the electrode catalyst and the electrochemical reaction condition can be implemented across a wide range of substance and condition at high speed.

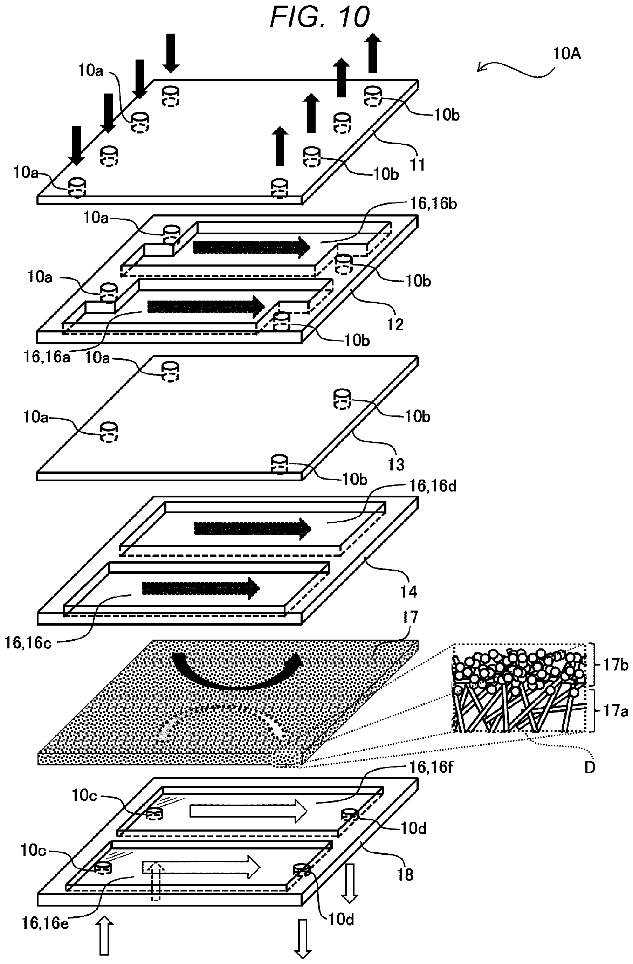

FIG. 10 is an exploded view of one example of the structure of the electrochemical cell. FIG. 10 shows a state when an electrochemical cell 10A provided in the electrochemical reaction system 2 is disassembled into components. A reference character D indicates a partial view schematically showing part of a gas diffusion electrode member 17 in closeup.

As shown in FIG. 10, the electrochemical reaction system 2 can include the gas diffusion electrode type electrochemical cell 10A including the gas diffusion electrode member 17.

The gas diffusion electrode type electrochemical cell 10A can be formed with a multilayer structure in which a first electrode member 11 forming the first electrode functioning as a cathode, a cathode-side flow path forming member 12 forming part of the wall surface of the chamber and a fluid flow path, a separator 13, an anode-side flow path forming member 14 forming part of the wall surface of the chamber and the fluid flow path, the gas diffusion electrode member 17 forming the second electrode functioning as an anode, and a gas flow path forming member 18 are stacked on each other in this order.

The components of the gas diffusion electrode type electrochemical cell 10A can be joined to each other by an arbitrary joining method such as welding, pressure-bonding, thermocompression bonding, sintering, diffusion joining, joining with solder or an adhesive, or joining with a joining component such as a screw or a gripping component. In addition to each component, the gas diffusion electrode type electrochemical cell 10A may include, e.g., a cell housing in which the components are assembled with each other, a holder that supports the components, and a seal that seals a clearance between the components.

In FIG. 10, the gas diffusion electrode type electrochemical cell 10A is provided with a structure having two chambers 16 in total. As the chambers 16, a first chamber (16a, 16c, 16e) and a second chamber (16b, 16d, 16f) are provided in parallel. In each of the first chamber (16a, 16c, 16e) and the second chamber (16b, 16d, 16f), different types of electrochemical reaction are made using different types of electrode catalysts.

Each of the first chamber (16a, 16c, 16e) and the second chamber (16b, 16d, 16f) is divided into a cathode-side space and an anode-side space by the separator 13. Further, such a chamber is divided into a liquid-side space and a gas-side space by the gas diffusion electrode member 17. The first chamber (16a, 16c, 16e) is formed by a cathode-side liquid space 16a, an anode-side liquid space 16c, and an anode-side gas space 16e. The second chamber (16b, 16d, 16f) is formed by a cathode-side liquid space 16b, an anode-side liquid space 16d, and an anode-side gas space 16f.

As shown in FIG. 10, in each chamber 16, a supply flow path 10a and a discharge flow path 10b are connected to each of the cathode-side liquid space 16a, 16b and the anode-side liquid space 16c, 16d. The supply flow path 10a and the discharge flow path 10b are formed by a through-hole provided in each component of the electrochemical cell 10A and a pipe or port connected to the electrochemical cell 10A.

Moreover, in each chamber 16, a gas supply flow path 10c and a gas discharge flow path 10d are connected to the anode-side gas space 16e, 16f. The gas supply flow path 10c and the gas discharge flow path 10d are formed by a through-hole provided in each component of the electrochemical cell 10A and a pipe or port connected to the electrochemical cell 10A.

The gas supply flow path 10c is a flow path for supplying gas from the outside of the electrochemical cell 10A into the chamber 16. The gas supply flow path 10c allows the liquid supply apparatus 30 and the gas space 16e, 16f of each chamber 16 to communicate with each other.

The gas discharge flow path 10d is a flow path for discharging gas from the inside of the chamber 16 to the outside of the electrochemical cell 10A. The gas discharge flow path 10d allows the gas space 16e, 16f of each chamber 16 to communicate with the gas liquid separation mechanism 40 or the outside of the electrochemical reaction system 2.

In the electrochemical reaction system 2, the liquid supply apparatus 30 can supply the liquid involved in the electrochemical reaction to the cathode-side liquid space 16a and anode-side liquid space 16c of the first chamber (16a, 16c, 16e) and the cathode-side liquid space 16b and anode-side liquid space 16d of the second chamber (16b, 16d, 16f). Moreover, the gas supply apparatus 50 can supply the gas involved in the electrochemical reaction to the gas space 16e of the first chamber (16a, 16c, 16e) and the gas space 16f of the second chamber (16b, 16d, 16f).

In the gas diffusion electrode type electrochemical cell 10A, the gas supplied to each chamber 16 penetrates the gas diffusion electrode member 17, and the electrochemical reaction involving liquid and gas is made accordingly. By the electrochemical reaction made using the electrode catalyst, a reactant of the liquid or the gas is transformed into a product. In the electrochemical cell 10A, e.g., electrochemical reaction using liquid and gas as reactants or electrochemical reaction of liquid under the presence of gas can be made.

After the electrochemical reaction in each chamber 16, the liquid and gas from the cathode-side liquid space 16a and anode-side liquid space 16c of the first chamber (16a, 16c, 16e), the liquid and gas from the cathode-side liquid space 16b and anode-side liquid space 16d of the second chamber (16b, 16d, 16f), the gas from the gas space 16e of the first chamber (16a, 16c, 16e), and the gas from the gas space 16f of the second chamber (16b, 16d, 16f) can be separately recovered through, e.g., the gas liquid separation mechanisms 40.

The gas diffusion electrode member 17 can be formed in, e.g., a flat plate shape or a flat membrane shape from a porous material having gas permeability. The gas diffusion electrode member 17 functions as an electrode, and allows gas circulation by diffusion. The gas diffusion electrode member 17 can be made of a material blocking liquid circulation. Moreover, the gas diffusion electrode member 17 can be arranged with the gas-side space on the upper side. According to the gas diffusion electrode member 17, the chamber 16 can be divided into the space where liquid flows and the space where gas flows.

In a case where the gas diffusion electrode member 17 is formed as an electrode catalyst, the gas diffusion electrode member 17 can be formed of a gas diffusion layer 17a made of a porous material and a catalyst layer 17b made of a catalyst material, as shown in the partial view D. The gas diffusion layer 17a can be provided, using, e.g., a hydrophobic material, with an arbitrary structure in, e.g., the form of non-woven fabric, a porous plate, or a porous sheet. The catalyst layer 17b can be stacked on a surface of the gas diffusion layer 17a. The catalyst layer 17b can be provided in such a manner that a membrane having an electrode catalyst material supported on a carrier as necessary and containing a catalyst material in an arbitrary shape such as a spherical shape or a granular shape is formed. In a case where the catalyst layer is one having gas permeability, such as a porous layer, the gas diffusion layer is not necessarily used, and only the catalyst layer can be used as the gas diffusion electrode.

The material of the gas diffusion layer 17a includes, e.g., a porous carbon material such as a carbon sheet and carbon cloth, porous fluorine resin such as polytetrafluoroethylene, and a porous metal material such as mesh metal, punching metal, and expanded metal. As the material of the catalyst layer 17b, an electrode catalyst material forming the above-described electrode member can be used. The porous metal material may include, e.g., stainless steel, copper, nickel, chromium, platinum, silver, gold, and aluminum. A current collector made of such a metal material may be stacked on the gas diffusion layer 17a or the catalyst layer 17b.

In a case where the gas diffusion electrode member 17 is formed as the electrode catalyst, the gas diffusion electrode member 17 can be provided with a gradient structure in which at least one of the material composition or the surface structure of the electrode changes. The material composition or the surface structure can be changed along one axial direction or two axial directions parallel with a creeping direction. For example, the type or concentration of the catalyst material forming the catalyst layer 17b or the density or thickness of the catalyst layer 17b can be changed by spotting or ink jetting.

The gas flow path forming member 18 can be formed in a flat plate shape from an electric insulating material having no gas permeability. The space forming the chamber 16 can be provided as, e.g., a recess in an arbitrary shape. The recesses of the gas flow path forming member 18 are covered by stacking the gas diffusion electrode member 17 thereon. As the material of the gas flow path forming member 18, a material similar to that of the flow path forming member can be used.

Note that in FIG. 10, the gas diffusion electrode member 17 forms the second electrode functioning as the anode, but may form the first electrode functioning as the cathode. In a case where the gas diffusion electrode member 17 forms the first electrode, the gas flow path forming member 18 can be provided outside the first electrode. Alternatively, the gas diffusion electrode members 17 may form both the first electrode and the second electrode.

The installation of the separator 13 may be omitted as long as concentration polarization on the cathode side and the anode side can be ensured. In a case where the installation of the separator 13 is omitted, the electrochemical cell 10A can be formed in such a manner that the electrode member, the flow path forming member, the gas diffusion electrode member, and the flow path forming member are stacked on each other in this order. The electrode member, the flow path forming member, and the gas diffusion electrode member and the chamber and flow path formed thereby can be provided with arbitrary shapes allowing the flow of the fluid involved in the electrochemical reaction.

According to the gas diffusion electrode type electrochemical cell 10A, the gas diffusion electrode can be used, and therefore, the electrochemical reaction between gas and liquid can be efficiently made. Gas and liquid can independently contact the electrode catalyst provided with the gradient structure, and therefore, plural types of electrochemical reaction involving gas and liquid according to combinatorial chemistry can be efficiently made in the single electrochemical cell 10A.

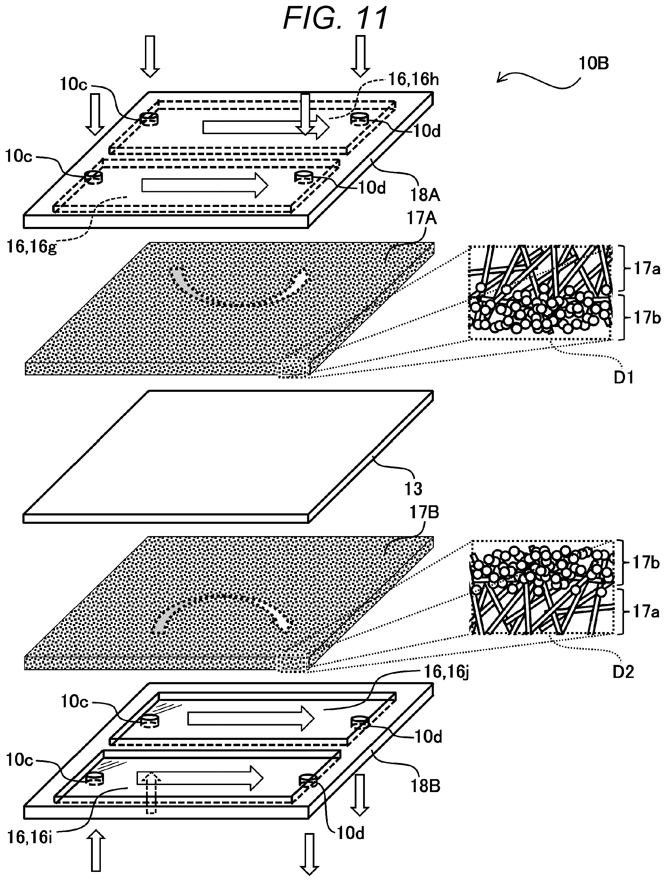

FIG. 11 is an exploded view of one example of the structure of the electrochemical cell. FIG. 11 shows a state when an electrochemical cell 10B provided in the electrochemical reaction system 2 is disassembled into components. A reference character D indicates a partial view schematically showing part of the gas diffusion electrode member 17 in closeup.

As shown in FIG. 11, the electrochemical reaction system 2 can include the membrane electrode assembly (MEA) electrochemical cell 10B including the gas diffusion electrode member 17 on each polarity side.

The MEA electrochemical cell 10B can be formed with a multilayer structure in which a cathode-side first gas flow path forming member 18A, a first gas diffusion electrode member 17A forming a gas diffusion first electrode functioning as a cathode, a separator 13, a second gas diffusion electrode member 17B forming a gas diffusion second electrode functioning as an anode, and an anode-side second gas flow path forming member 18B are stacked on each other in this order.

The components of the MEA electrochemical cell 10B can be joined to each other by an arbitrary joining method such as welding, pressure-bonding, thermocompression bonding, sintering, diffusion joining, joining with solder or an adhesive, or joining with a joining component such as a screw or a gripping component. In addition to each component, the MEA electrochemical cell 10B may include, e.g., a cell housing in which the components are assembled with each other, a holder that supports the components, and a seal that seals a clearance between the components.

In FIG. 11, the MEA electrochemical cell 10B is provided with a structure having two chambers 16 in total. As the chambers 16, a first chamber (16g, 16i) and a second chamber (16h, 16j) are provided in parallel. In each of the first chamber (16g, 16i) and the second chamber (16h, 16j), different types of electrochemical reaction are made using different types of electrode catalysts.

Each of the first chamber (16g, 16i) and the second chamber (16h, 16j) is divided into a cathode-side space and an anode-side space by an MEA in which the separator 13 and the gas diffusion electrode members 17 are stacked on each other. The first chamber (16g, 16i) is formed by a cathode-side gas space 16g and an anode-side gas space 16i. The second chamber (16h, 16j) is formed by a cathode-side gas space 16h and an anode-side gas space 16j.

As shown in FIG. 11, in each chamber 16, the gas supply flow path 10c and the gas discharge flow path 10d are connected to each of the cathode-side gas space 16g, 16h and the anode-side gas space 16i, 16j. The gas supply flow path 10c allows the liquid supply apparatus 30 and the gas space 16g, 16h, 16i, 16j of each chamber 16 to communicate with each other. The gas discharge flow path 10d allows the gas space 16g, 16h, 16i, 16j of each chamber 16 to communicate with the gas liquid separation mechanism 40 or the outside of the electrochemical reaction system 2.

In the electrochemical reaction system 2, the gas supply apparatus 50 can supply the gas involved in the electrochemical reaction to the cathode-side gas space 16g and anode-side gas space 16i of the first chamber (16g, 16i) and the cathode-side gas space 16h and anode-side gas space 16j of the second chamber (16h, 16j).

In the MEA electrochemical cell 10B, the gas supplied to each chamber 16 penetrates the gas diffusion electrode member 17, and the electrochemical reaction between gases is made accordingly. By the electrochemical reaction made using the electrode catalyst, a reactant of the gas is transformed into a product. In the electrochemical cell 10B, electrochemical reaction made using gas as a reactant can be made.

After the electrochemical reaction in each chamber 16, the gas from the cathode-side gas space 16g and anode-side gas space 16i of the first chamber (16g, 16i) and the gas from the cathode-side gas space 16h and anode-side gas space 16j of the second chamber (16h, 16j) can be separately recovered. In a case where liquid is generated by the reaction between the gases, the liquid may be recovered through the gas liquid separation mechanism 40.

As in the gas diffusion electrode member 17, the first gas diffusion electrode member 17A and the second gas diffusion electrode member 17B can be formed in, e.g., a flat plate shape or a flat membrane shape from a porous material having gas permeability. According to the gas diffusion electrode members 17A, 17B, the electrochemical reaction involving gas can be efficiently made targeted for, e.g., gas having lower solubility to liquid.

As shown in the partial views D1, D2, each of the first gas diffusion electrode member 17A and the second gas diffusion electrode member 17B can be formed of a gas diffusion layer 17a made of a porous material and a catalyst layer 17b made of a catalyst material. The gas diffusion layer 17a is preferably arranged closer to the gas flow path forming member 18A, 18B. The catalyst layer 17b is preferably arranged closer to the separator 13. With such arrangement, the efficiency of charge exchange between the cathode side and the anode side and the efficiency of contact of gas with the catalyst material can be improved.

At least one of the first gas diffusion electrode member 17A or the second gas diffusion electrode member 17B can be provided with a gradient structure in which at least one of the material composition or the surface structure of the electrode changes. The material composition or the surface structure can be changed along one axial direction or two axial directions parallel with the creeping direction. For example, the type or concentration of the catalyst material forming the catalyst layer 17b or the density or thickness of the catalyst layer 17b can be changed by spotting or ink jetting.

The first gas flow path forming member 18A and the second gas flow path forming member 18B can be formed in a flat plate shape from an electric insulating material having no gas permeability. The space forming the chamber 16 can be provided as, e.g., a recess in an arbitrary shape. The dips of the gas flow path forming member 18A, 18B are covered by stacking the gas diffusion electrode member 17A, 17B thereon. As the material of the gas flow path forming member 18A, 18B, a material similar to that of the flow path forming member can be used.

The installation of the separator 13 may be omitted as long as concentration polarization on the cathode side and the anode side can be ensured. In a case where the installation of the separator 13 is omitted, the electrochemical cell 10B can be formed in such a manner that the first flow path forming member, the first gas diffusion electrode member, the second gas diffusion electrode member, and the second flow path forming member are stacked on each other in this order. The flow path forming member and the gas diffusion electrode member and the chamber and flow path formed thereby can be provided with arbitrary shapes allowing the flow of the fluid involved in the electrochemical reaction.

According to the MEA electrochemical cell 10B, the gas diffusion electrode can be used at each polarity, and therefore, the electrochemical reaction of gas can be efficiently made. Gas can independently contact the electrode catalyst provided with the gradient structure, and therefore, plural types of electrochemical reaction involving gas according to combinatorial chemistry can be efficiently made in the single electrochemical cell 10B.

Note that in the gas diffusion electrode type electrochemical cell 10A and the MEA electrochemical cell 10B, each chamber 16 is divided into the liquid space and the gas space, but only gas, only liquid, or mixed fluid of gas and liquid may be supplied to each chamber 16 contacting the gas diffusion electrode. Different types of fluid may be supplied to the chambers 16 arrayed in parallel. In a case of supplying liquid, the gas diffusion layer 17a preferably has hydrophobic properties.

### <Third Embodiment>

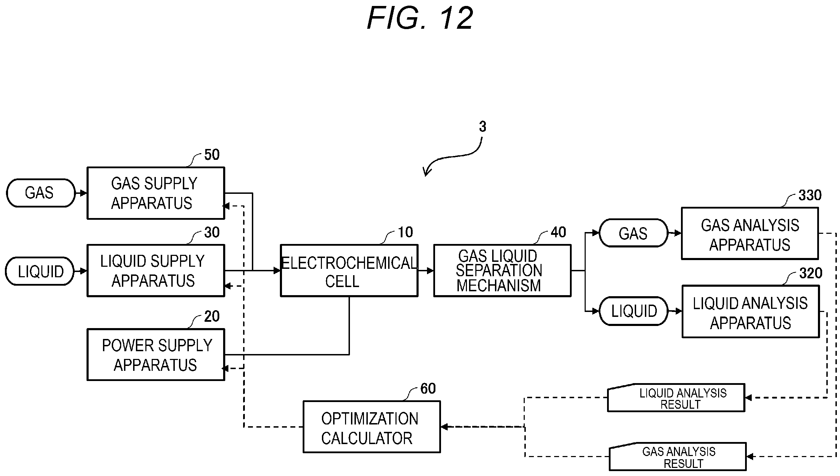

FIG. 12 is a diagram schematically showing an electrochemical reaction system according to a third embodiment.

As shown in FIG. 12, the electrochemical reaction system 3 according to the third embodiment includes an electrochemical cell 10, a power supply apparatus 20, a liquid supply apparatus 30, and a gas liquid separation mechanism 40 as in the electrochemical reaction system 1.

The electrochemical reaction system 3 according to the third embodiment is a system that makes electrochemical reaction using an electrode catalyst as in the electrochemical reaction system 1. The electrochemical reaction system 3 is different from the electrochemical reaction system 1 in that an optimization calculator 60 is additionally provided. Other main components of the electrochemical reaction system 3 are similar to those of the electrochemical reaction system 1.

In the electrochemical reaction system 3, liquid discharged from a chamber of the electrochemical cell 10 is transferred to a liquid analysis apparatus 70. Moreover, gas discharged from the chamber of the electrochemical cell 10 is transferred to a gas analysis apparatus 80. For the fluid transferred from each chamber to the liquid analysis apparatus 70 or the gas analysis apparatus 80, different electrode catalysts are used.

The liquid analysis apparatus 70 quantitates a substance contained in the liquid discharged from the chamber of the electrochemical cell 10. The gas analysis apparatus 80 quantitates a substance contained in the gas discharged from the chamber of the electrochemical cell 10. For each of the chambers for which different electrode catalysts are used, the liquid analysis apparatus 70 and the gas analysis apparatus 80 obtain the amount and composition of a component contained in the fluid after the electrochemical reaction. An analysis result obtained by the liquid analysis apparatus 70 and an analysis result obtained by the gas analysis apparatus 80 are input to the optimization calculator 60.

The optimization calculator 60 performs optimization calculation processing of optimizing an electrode catalyst used for the electrochemical reaction and an electrochemical reaction condition. The optimization calculator 60 includes hardware such as a computer. The optimization calculation processing is implemented in such a manner that the optimization calculator 60 executes a mathematical optimization program for the electrode catalyst type used for the electrochemical reaction and the electrochemical reaction condition.

The optimization calculator 60 includes, e.g., an arithmetic apparatus such as a central processing unit (CPU), a storage apparatus such as a random access memory (RAM), a read only memory (ROM), a hard drive, or a flash memory, an input apparatus such as a keyboard, a mouse, or a touch panel, an output apparatus such as a liquid crystal display or an organic EL display, and a control apparatus.

The optimization calculator 60 can be communicably connected to the liquid analysis apparatus 70 and the gas analysis apparatus 80. The analysis result showing the component amount and composition of the liquid recovered from the electrochemical cell 10 and the analysis result showing the component amount and composition of the gas recovered from the electrochemical cell 10 can be input to the optimization calculator 60 via a communication line, for example.

The optimization calculator 60 can be connected to a controller of the power supply apparatus 20, a controller of the liquid supply apparatus 30, and a controller of the gas supply apparatus 50 via a control signal line. The optimization calculator 60 can output a control signal based on the optimization calculation result to each controller, thereby controlling the power supply apparatus 20, the liquid supply apparatus 30, and the gas supply apparatus 50.

The optimization calculator 60 collects, from the liquid analysis apparatus 70 and the gas analysis apparatus 80, the electrochemical reaction result for each of the chambers of the electrochemical cell 10 using plural different types of electrode catalyst materials. Based on the analysis result for each chamber of the electrochemical cell 10, the optimization calculator 60 executes the optimization calculation. In the optimization calculation, mathematical optimization of the electrode catalyst type used for the electrochemical reaction and the electrochemical reaction condition is performed.

Based on the optimization calculation result, the optimization calculator 60 can control the power supply apparatus 20, the liquid supply apparatus 30, and the gas supply apparatus 50 such that the electrode catalyst type used for the electrochemical reaction and the electrochemical reaction condition are optimized. By control of feeding back the optimization calculation, e.g., the type of chamber used for the electrochemical reaction, a chamber connection path, and the electrochemical reaction condition are changed.

In the optimization calculation, a mathematical optimization problem can be formulated using, e.g., the type of chamber used for the electrochemical reaction, the chamber connection path, and the electrochemical reaction condition as operation variables. The optimization calculation can be performed according to an arbitrary algorithm. By the optimization calculation, a solution for maximizing or minimizing a predetermined objective variable is obtained. A limiting condition may or may not be added to the optimization calculation.

In the optimization calculation, for example, a neural network can be built using a data group obtained by segmentalization of the chamber according to the electrode catalyst as a node. Linear regression calculation can be performed in such a manner that a data group obtained by segmentalization of the chamber according to the electrode catalyst or a data group of the electrochemical reaction condition is taken as data showing a linear relationship.

As the operation variable, binary such as which one of the chambers including different types of electrode catalysts is used or which one of the chamber connections is used can be set. As the electrochemical reaction condition, e.g., the chemical composition or mixed composition of liquid supplied to the chamber, the flow rate of liquid supplied to the chamber, the time of supply of liquid to the chamber, the chemical composition or mixed composition of gas supplied to the chamber, the flow rate of gas supplied to the chamber, the time of supply of gas to the chamber, a voltage value applied between the electrodes, and a current value applied between the electrodes can be set.

As the objective variable, e.g., the amount of product generated by the electrochemical reaction, the ratio of product generated by the electrochemical reaction, the yield of product generated by the electrochemical reaction, the reaction rate of reactant in the electrochemical reaction, and the amount of energy necessary for production of a product can be set. As the limiting condition, arbitrary upper limits and arbitrary lower limits of these variables can be set. By setting the objective variable as described above, selectivity of the chemical composition or mixed composition of a product and high production amount and efficiency of a product can be ensured.

In the optimization calculation, an intermediate variable between the operation variable and the objective variable may be set in addition to the operation variable and the objective variable. As the intermediate variable, a variable depending on the operation variable and the objective variable and having directionality from the operation variable to the objective variable can be set. The intermediate variable includes, for example, a variable related to voltage-current properties showing a voltage-current relationship between the electrodes and a variable related to a component adsorbing to the surface of the electrode catalyst, such as a fluid-derived ion.

The optimization calculator 60 may update, by machine learning, the operation variable in the optimization calculation, an objective function indicating the objective variable, or a function indicating the intermediate variable. For example, new analysis results different from each other in the chamber type, the chamber connection path, a chamber extension path, and the electrochemical reaction condition can be learnt as new patterns different from each other in a response to the objective variable or the intermediate variable. Combination optimization can be executed with the operation variable updated by machine learning, or optimization can be executed with the function updated by machine learning.

According to the electrochemical reaction system 3, the optimization calculation for optimizing the electrode catalyst and the electrochemical reaction condition can be performed based on the analysis result showing the component amount and composition of the fluid recovered from the chamber after the electrochemical reaction. For the single electrochemical cell 10 using plural types of electrode catalyst materials, e.g., the chamber type, the chamber connection path, the chamber extension path, and the electrochemical reaction condition can be optimized such that, e.g., the generation amount and ratio of a product are maximized. Thus, generation of a substance by the electrochemical reaction using the electrode catalyst can be efficiently executed.

The embodiments of the present invention have been described above, but the present invention is not limited to the above-described embodiments and various changes can be made without departing from the gist of the present invention. For example, the present invention is not limited to those including all the components of the above-described embodiments. Some components of a certain embodiment can be replaced with other components, some components of a certain embodiment can be added to other embodiments, and some components of a certain embodiment can be omitted.

For example, the structures of the electrochemical cell shown in FIGS. 5 to 8 may be applied to any of, e.g., the electrochemical cell shown in FIGS. 2A and 2B, the electrochemical cell shown in FIG. 10, the electrochemical cell shown in FIG. 11, and electrochemical cells similar thereto.

## Claims

1. An electrochemical reaction system comprising:
an electrochemical cell having a first electrode functioning as a cathode, a second electrode functioning as an anode, and a chamber in which electrochemical reaction is made by the first electrode and the second electrode;
a power supply apparatus that applies voltage between the first electrode and the second electrode; and
a fluid supply apparatus that supplies fluid involved in the electrochemical reaction to the chamber,
wherein at least one of the first electrode or the second electrode is made of plural types of electrode materials different from each other in at least one of a composition of a material forming the electrode or a surface structure of the electrode, and
at least part of a wall surface of the chamber is made of the plural types of electrode materials.

2. The electrochemical reaction system according to claim 1, wherein
the electrochemical cell generates plural types of products different from each other in at least one of a chemical composition forming a substance or a mixed composition forming a mixture from a reactant supplied to the chamber by the electrochemical reaction made using the plural types of electrode materials as a catalyst.

3. The electrochemical reaction system according to claim 1, wherein
the fluid is at least one of raw fluid containing a reactant of the electrochemical reaction or electrolyte liquid mediating charge transfer in the electrochemical reaction.

4. The electrochemical reaction system according to claim 1, further comprising:
a gas liquid separation mechanism that separates fluid discharged from the chamber into gas and liquid.

5. The electrochemical reaction system according to claim 4, wherein
the gas liquid separation mechanism is a membrane separation apparatus including a hydrophobic porous membrane.

6. The electrochemical reaction system according to claim 1, wherein
the electrochemical cell has a multilayer structure in which a first electrode member forming the first electrode, a flow path forming member forming part of the wall surface of the chamber and a fluid flow path, and a second electrode member forming the second electrode are stacked on each other in this order.

7. The electrochemical reaction system according to claim 6, wherein
the electrochemical cell has a multilayer structure in which a first flow path forming member forming part of the wall surface of the chamber and the fluid flow path, a first electrode member forming a gas diffusion first electrode, a second electrode member forming a gas diffusion second electrode, and a second flow path forming member forming part of the wall surface of the chamber and the fluid flow path are stacked on each other in this order.

8. The electrochemical reaction system according to claim 6 or 7, wherein
at least one of the first electrode member or the second electrode member is provided with a gradient structure in which at least one of a composition of a material forming the electrode or a surface structure of the electrode changes in a creeping direction along the first electrode member and the second electrode member.

9. The electrochemical reaction system according to claim 8, wherein
the electrochemical cell includes a plurality of chambers, and
the plurality of chambers forms independent spaces not communicating with each other.

10. The electrochemical reaction system according to claim 9, wherein
each space forming the chamber is arranged so as to extend in one axial direction parallel with a creeping direction along the first electrode member, the flow path forming member, and the second electrode member.

11. The electrochemical reaction system according to claim 9, wherein
each space forming the chamber is arranged so as to extend in a plurality of axial directions parallel with a creeping direction along the first electrode member, the flow path forming member, and the second electrode member.

12. The electrochemical reaction system according to claim 9, wherein
the spaces forming the chambers are formed in matrix in a creeping direction along the first electrode member, the flow path forming member, and the second electrode member.

13. The electrochemical reaction system according claim 8, wherein
the electrochemical cell includes a plurality of chambers, and
the plurality of chambers forms a communicating continuous space.

14. The electrochemical reaction system according to claim 13, wherein
the space forming the chambers is formed in matrix in a creeping direction along the first electrode member, the flow path forming member, and the second electrode member.

15. The electrochemical reaction system according to claim 1, further comprising:
a calculator that performs optimization calculation processing of optimizing an electrode used for the electrochemical reaction and an electrochemical reaction condition based on an analysis result obtained by an analysis apparatus that quantitates a substance contained in fluid discharged from the chamber.
